# EUROPÄISCHE PATENTSCHRIFT

(11) **EP 2 835 238 B1**
(45) Veröffentlichungstag und Bekanntmachung des Hinweises auf die Patenterteilung: **04.11.2015**
(21) Anmeldenummer: 14179737.3
(22) Anmeldetag: 04.08.2014
(51) Int. Cl.: B28B 7/36, B28B 11/00, C04B 41/72

(54) **Verfahren zum Herstellen von Waschbetonoberflächen**
Method for producing of exposed aggregate concrete surfaces
Procédé de fabrication de surfaces en béton lavé

(30) Priorität: 06.08.2013 DE 102013013102
(43) Veröffentlichungstag der Anmeldung: 11.02.2015
(73) Patentinhaber: Messer France S.A.S., 92816 Puteaux Cedex (FR)
(72) Erfinder: Follut, Florian, 69330 Meyzieu (FR)
(74) Vertreter: Münzel, Joachim R.

(56) Entgegenhaltungen:
- DE-A1- 10 234 932
- DE-A1- 19 603 141
- FR-A5- 2 203 310
- JP-B1- 2 996 231
- US-A1- 2008 286 519

## Beschreibung

Die Erfindung betrifft ein Verfahren zum Herstellen eines waschbetonartigen Werkstücks, bei dem Zementleim mit Gesteinskörnung vermischt und in einer Form oder einer Schalung zu Frischbeton aufgegossen wird, der Frischbeton an einer Oberfläche zumindest abschnittsweise mit einem Mittel zum Verzögern des Abbindens behandelt wird und die mit dem Mittel zum Verzögern des Abbindens behandelte Oberfläche einer Waschung unterzogen wird, bei welcher durch den Kontakt von Frischbeton mit dem Mittel zum Verzögern des Abbindens entstandener Zementschlamm zumindest weitgehend vom Werkstück abgelöst wird.

Zur Herstellung waschbetonartiger Bauteile werden Oberflächen der verwendeten Form oder Schalung, in die der Frischbeton gefüllt wird, oder eine außen liegende Oberfläche des Frischbetons zumindest abschnittsweise mit einem speziellen Mittel, dem sogenannten Erstarrungsverzögerer (oder Abbindeverzöger) behandelt. Der Erstarrungsverzögerer führt dazu, dass das Abbinden des Betons an den betreffenden Stellen der Oberfläche, die mit der Beschichtung versehen sind, gehemmt oder vollständig unterbunden wird. Nach einer Zeitdauer zwischen 5 und 24 Stunden wird die behandelte Oberfläche abgewaschen. Die Waschung erfolgt dabei entweder mittels Wasser und Bürste, oder die Oberfläche wird mit einem Wasserstrahl aus einem Hochdruck-Wasserstrahlgerät mit einem Druck von beispielsweise 100 bar und mehr abgestrahlt. Bei der Waschung löst sich der bei der Reaktion des Erstarrungsverzögerers mit dem Zementleim gebildete Zementschlamm von der behandelten Oberfläche bzw. von den behandelten Oberflächenteilen ab, und die im Beton enthaltene Gesteinskörnung tritt deutlicher in den Vordergrund.

Der Terminus "waschbetonartig" soll im Rahmen der vorliegenden Erfindung im Übrigen alle Arten von Beton mit hervortretender Gesteinskörnung umfassen, insbesondere klassischer Waschbeton (mit einer Dicke der abzuwaschenden Schicht aus Zementschlamm von mehr als 2 mm), feingewaschener Beton (mit 2 mm abzuwaschender Schichtdicke) oder Fotobeton.

Beispiele für Verfahren zur Herstellung von Waschbetonoberflächen finden sich beispielsweise in der DE 2 419 889 A1. Als Mittel zum Verzögern des Abbindens kommen Stoffe auf Lösemittelbasis zum Einsatz, jedoch werden aus Gründen des Umweltschutzes zunehmend Stoffe auf Wasserbasis verwendet, wie sie beispielsweise in der EP 1 526 120 A2 oder der DE 10 2009 35 267 A1 beschrieben sind. Während Erstarrungsverzögerer auf Lösemittelbasis aus Umweltgründen bedenklich sind, haben Erstarrungsverzögerer auf Wasserbasis den Nachteil einer recht langen Trocknungsdauer von über 30 min.

JP 2 996231 B1 offenbart ein Verfahren zum Herstellen eines waschbetonartigen Werkstücks gemäß dem Oberbegriff des Anspruchs 1.

Der Erfindung liegt daher die Aufgabe zu Grunde, ein alternatives Verfahren zum Herstellen von waschbetonartigen Werkstücken bereitzustellen, das in Bezug auf Umweltaspekte unbedenklich ist und keine lange Trocknungsdauer erfordert.

Diese Aufgabe wird mit einem Verfahren zur Herstellung von waschbetonartigen Werkstücken mit den Merkmalen des Anspruchs 1 gelöst. Vorteilhafte Ausgestaltungen der Erfindungen sind in den Unteransprüchen angegeben.

Erfindungsgemäß kommt also als Mittel zum Verzögern des Abbindens ein kryogenes Kältemittel, wie beispielsweise flüssiger Stickstoff oder Trockeneis zum Einsatz, das mit der zu behandelnden Oberfläche des Frischbetons in Kontakt gebracht wird. Die Beaufschlagung der zu behandelnden Oberfläche mit einem kryogenen Kältemittel führt zu einer starken Abkühlung, bis hin zu einem teilweisen Einfrieren einer Oberflächenschicht im Betonteil. Es hat sich gezeigt, dass eine derartige Kältebehandlung zu einem ähnlichen Effekt wie eine Behandlung mit einem konventionellen Erstarrungsverzögerer führt. Durch die starke Kühlung wird das Abbinden des Zementleims gehemmt oder vollständig unterbrochen Zugleich führt eine Abkühlung auf Temperaturen unter 5°C zu einerirreversiblen Volumenvergrößerung des Frischbetons, die mit einer starken Reduzierung der mechanischen Festigkeit des behandelten Frischbetons verbunden ist. Dadurch lassen sich bei der Waschung, die, wie auch bei den bekannten Verfahren, nach einer Zeitdauer von 5 bis 24 Stunden erfolgt, die entsprechend behandelten Teile des Zementleims (der "Zementschlamm") leicht ablösen und die Gesteinskörnung und/oder unbehandelte Teile des Betons tritt/treten hervor.

Nach der Kältebehandlung verdampft oder sublimiert das kryogene Kältemittel rückstandsfrei und muss nicht aufwändig aufgefangen und entsorgt werden. Mit dem erfindungsgemäßen Verfahren können waschbetonartige Oberflächen mit einer Abwaschtiefe von bis zu 0,6 cm und darüber realisiert werden. Das erfindungsgemäße Verfahren ist sowohl zur Behandlung vorgefertigter Werkstücke (Betonwerksteine) als auch zur Behandlung von vor Ort gegossenen Werkstücken, wie beispielsweise Gehwegplatten oder Straßenbelägen, geeignet und kann im Übrigen anstelle oder ergänzend zu einer Behandlung des Werkstücks entsprechend der bekannten Verfahren mit einem üblichen Erstarrungsverzögerer auf Lösemittel- oder Wasserbasis erfolgen. Durch den Einsatz des erfindungsgemäßen Verfahrens wird somit der Einsatz konventioneller Erstarrungsverzögerer erheblich reduziert oder kann sogar ganz eingespart werden.

Die Dicke der durch die kryogene Kältebehandlung beeinflussten Oberflächenschicht hängt insbesondere von der Dauer der Kältebehandlung und der Temperatur des kryogenen Kältemittels ab. Je länger die Dauer der Kältebehandlung und je tiefer die Temperatur des eingesetzten kryogenen Kältemittels ist, desto dicker ist die Zementschlammschicht, die bei der anschließenden Waschung vom Bauelement entfernt werden kann. Bevorzugt wird bei der Kältebehandlung mit dem kryogenen Kältemittel die zu behandelnde Oberfläche auf eine Temperatur von 0°C oder darunter abgekühlt. Bei einer Temperatur von unter 5°C kommen die mit dem Abbinden verbundene Hydratisierungsprozesse im Zementleim zum Erliegen. Bei einer Abkühlung unter 0°C vor oder während des Abbhdevorgangs kommt es zu einer irreversiblen Quellung und zu einer Reduzierung des Haftkräfte zwischen Zementleim und den Partikeln der Gesteinskörnung sowie zu einer irreversiblen Reduzierung der mechanischen Festigkeit, wodurch die Entfernung des Zements bei der anschließenden Waschung erleichtert wird. Bei einer auch nur kurzzeitigen Abkühlung der Oberfläche auf eine Temperatur von -10°C oder darunter wird gewährleistet, dass diese Temperatureffekte innerhalb einer gewissen Schichtdicke auftreten, und nach der Waschung eine gute optische Anmutung der Waschbetonoberfläche erzielt wird. Überdies kann durch Variation der Behandlungsdauern bei der Behandlung verschiedener Oberflächenbereiche desselben Werkstücks gezielt eine besondere Oberflächenbeschaffenheit des Werkstücks herbeigeführt werden.

Als ein bevorzugtes kryogenes Kältemittel kommt Kohlendioxid zum Einsatz. Zur Kältebehandlung wird das Kohlendioxid im festen Zustand, beispielsweise in Form von Trockeneispartikeln, oder als kaltes Gas direkt auf die zu behandelte Oberfläche aufgetragen, oder das Kohlendioxid wird unter Druck im flüssigen Zustand herangeführt und unmittelbar vor dem Auftragen auf die zu behandelnde Oberfläche entspannt, wobei das flüssige Kohlendioxid in ein Gemisch aus Kohlendioxidgas und Kohlendioxidschnee übergeht. Neben dem Kälteeffekt kommt bei Kohlendioxid hinzu, dass es mit dem Wasser des Zementleims zu Kohlensäure reagiert, die die mechanische Festigkeit des Zements innerhalb der Oberflächenschicht, in die das Kohlendioxid eindringt, weiter reduziert. Der Einsatz von Kohlendioxid als kryogenes Kältemittel ermöglicht eine gute Steuerung der Tiefe der Textur, zudem erhöht sich aufgrund des Säureeinflusses auf die Gesteinskörnung bei farbigen Betonflächen die Farbbrillianz.

In einer vorteilhaften Ausgestaltung der Erfindung kommt als Kältemittel Trockeneis zum Einsatz. Bevorzugt werden die Trockeneispartikel in Form von Kohlendioxidschnee oder Kohlendioxidpellets dabei in einem Trägergasstrom mittels einer Strahlapparatur auf die zu behandelnde Oberfläche aufgetragen.

Ein gleichfalls bevorzugtes kryogenes Kältemittel ist Stickstoff, der in verflüssigter Form oder als kaltes Gas auf die zu behandelnde Oberfläche aufgetragen wird. Das Auftragen erfolgt beispielsweise mittels einer Flüssigstickstoffleitung, die mit einer Sprühdüse ausgerüstet ist, mittel der der flüssige Stickstoff auf die Oberfläche aufgetragen wird.

In einer abermals vorteilhaften Ausgestaltung des erfindungsgemäßen Verfahrens umfasst auch die Waschung einen Arbeitsschritt, bei dem eine Bestrahlung der mit dem Erstarrungsverzögerer behandelten Oberfläche mit einem kryogenen Kältemittel erfolgt. Hierzu werden besonders bevorzugt Trockeneisteilchen mittels einer Strahlapparatur auf die zu behandelnde Oberfläche aufgetragen, wobei die abrasive Wirkung der mit hoher Geschwindigkeit auf die Oberfläche auftreffenden Trockeneisteilchen zusätzlich für eine schnelle und effiziente Entfernung des Zementschlamms sorgen. Alternativ oder ergänzend zum Trockeneis kann insbesondere auch Stickstoff zum Einsatz kommen, der in flüssiger Form auf die behandelte Oberfläche aufgestrahlt wird.

Als besonders vorteilhaft erweist sich das erfindungsgemäße Verfahren bei der Herstellung begehbarer Bodenplatten, beispielsweise Gehwegplatten oder Beläge für Straßen und Plätze. Derartige Platten werden aufgrund ihrer großen Fläche direkt am Einsatzort hergestellt. Hier kann die erfindungsgemäße Kältebehandlung ihre Vorteile der großflächigen und rückstandsfreien Anwendbarkeit besonders gut entfalten.

### Beispiel:

Ein Waschbeton-Bauelement, beispielsweise eine Gehwegplatte, wird nach dem Eingießen des Frischbetons in eine die Außenabmessungen der Gehwegplatte begrenzenden Gießform mittels Kohlendioxidpartikel (T= -78°C) behandelt. Dabei wird eine Schicht an der Oberfläche von ca. 0,5 cm Dicke auf eine Temperatur von durchschnittlich -20°C gekühlt. Um dies zu erreichen, wird die Oberfläche des Bauelements mit Trockeneisteilchen in Form von Schnee oder Pellets bestrahlt. Die Kohlendioxidpartikel sublimieren weitgehend rückstandsfrei; ein kleiner Teil des Kohlendioxids löst sich im Wasser des Frischbetons. Aufgrund der Kälteeinwirkung sowie durch den Einfluss der sich bildenden Kohlensäure lässt sich der Zementschleim in der 0,5 cm stake Oberflächenschicht nach einer Abbindezeit von ca. 5 bis 24 Stunden problemlos mittels Hochdruckbestrahlung mit Wasser und/oder wiederum Trockeneispartikel als Strahlmittel entfernen.

## Patentansprüche

1. Verfahren zum Herstellen eines waschbetonartigen Werkstücks, bei dem Zementleim mit Gesteinskörnung vermischt und in einer Form oder einer Schalung zu Frischbeton aufgegossen wird, der Frischbeton an einer Oberfläche zumindest abschnittsweise mit einem Mittel zum Verzögern des Abbindens behandelt wird und die mit dem Mittel zum Verzögern des Abbindens behandelte Oberfläche einer Waschung unterzogen wird, bei welcher durch den Kontakt von Frischbeton mit dem Mittel zum Verzögern des Abbindens entstandener Zementschlamm zumindest weitgehend vom Werkstück abgelöst wird,
**dadurch gekennzeichnet,**
**dass** als Mittel zum Verzögern des Abbindens ein kryogenes Kältemittel zum Einsatz kommt, das mit der behandelnden Oberfläche des Frischbetons in Kontakt gebracht wird und diese dadurch abkühlt.

2. Verfahren nach Anspruch 1, **dadurch gekennzeichnet, dass** die zu behandelnde Oberfläche beim Kontakt mit den kryogenen Kältemittel auf eine Temperatur von unter 0°C, bevorzugt auf eine Temperatur von unter - 10°C abgekühlt wird.

3. Verfahren nach Anspruch 1 oder 2, **dadurch gekennzeichnet, dass** als kryogenes Kältemittel Kohlendioxid zum Einsatz kommt.

4. Verfahren nach einem der vorhergehenden Ansprüche, **dadurch gekennzeichnet, dass** als kryogenes Kältemittel festes Kohlendioxid in Form von Schnee oder Pellets zum Einsatz kommt, die mittels einer Strahlapparatur auf die zu behandelnde Oberfläche aufgetragen wird.

5. Verfahren nach Anspruch 1 oder 2 **dadurch gekennzeichnet, dass** als kryogenes Kältemittel flüssiger oder kalter gasförmiger Stickstoff zum Einsatz kommt.

6. Verfahren nach einem der vorhergehenden Ansprüche, **dadurch gekennzeichnet, dass** die Waschung eine Bestrahlung der mit dem Mittel zum Verzögern des Abbindens behandelten Oberfläche mit einem kryogenen Kältemittel umfasst.

7. Verfahren nach Anspruch 6, **dadurch gekennzeichnet, dass** die Bestrahlung der behandelten Oberfläche mit dem kryogenen Kältemittel eine Bestrahlung mit Trockeneisteilchen und/oder mit einem Flüssigstickstoffstrahl umfasst.

8. Verfahren nach einem der vorhergehenden Ansprüche, **dadurch gekennzeichnet, dass** als Bauelement eine begehbare Bodenplatte, beispielsweise eine Gehwegplatte vorgesehen ist.

## Claims

1. Method for producing a workpiece of exposed-aggregate concrete type, wherein cement paste is mixed with aggregate and poured into a mould or a form to give fresh concrete, the fresh concrete is treated on a surface at least sectionally with an agent for retarding setting, and the surface treated with the agent for retarding setting is subjected to a washing operation wherein cement slurry arising from the contact of fresh concrete with the agent for retarding setting is detached at least largely from the workpiece,
**characterized**
**in that** agent for retarding setting used comprises a cryogenic refrigerant which is contacted with the treatment surface of the fresh concrete and thereby cools it.

2. Method according to Claim 1, **characterized in that** on contact with the cryogenic refrigerant, the treatment surface is cooled to a temperature of below 0°C, preferably to a temperature of below -10°C.

3. Method according to Claim 1 or 2, **characterized in that** cryogenic refrigerant used comprises carbon dioxide.

4. Method according to any of the preceding claims, **characterized in that** cryogenic refrigerant used comprises solid carbon dioxide in the form of snow or pellets, applied to the treatment surface by means of a jetting apparatus.

5. Method according to Claim 1 or 2, **characterized in that** cryogenic refrigerant used comprises liquid or cold gaseous nitrogen.

6. Method according to any of the preceding claims, **characterized in that** the washing operation comprises a jetting of the surface treated with the agent for retarding setting with a cryogenic refrigerant.

7. Method according to Claim 6, **characterized in that** the jetting of the treated surface with the cryogenic refrigerant comprises jetting with dry ice particles and/or with a jet of liquid nitrogen.

8. Method according to any of the preceding claims, **characterized in that** a trafficable ground slab, for example a paving slab, is provided as construction element.

## Revendications

1. Procédé pour la fabrication d'une pièce en béton lavé, dans lequel une pâte de ciment est mélangée avec un granulat et coulée dans un moule ou un coffrage en béton frais, le béton frais est traité sur une surface, au moins par sections, par un agent pour retarder la prise et la surface traitée par l'agent pour retarder la prise est soumise à un lavage, lors duquel la barbotine formée par le contact du béton frais avec l'agent pour retarder la prise est enlevée, au moins dans une large mesure, de la pièce, **caractérisé en ce qu'**on utilise, comme agent pour retarder la prise, un réfrigérant cryogène, qui est mis en contact avec la surface traitée du béton frais et qui la refroidit de ce fait.

2. Procédé selon la revendication 1, **caractérisé en ce que** la surface à traiter est refroidie, lors du contact avec le réfrigérant cryogène, à une température inférieure à 0°C, de préférence à une température inférieure à -10°C.

3. Procédé selon la revendication 1 ou 2, **caractérisé en ce qu'**on utilise, comme réfrigérant cryogène, du dioxyde de carbone.

4. Procédé selon l'une quelconque des revendications précédentes, **caractérisé en ce qu'**on utilise, comme réfrigérant cryogène, du dioxyde de carbone solide sous forme de neige ou de pellets, qui est appliqué au moyen d'un appareil à jet sur la surface à traiter.

5. Procédé selon la revendication 1 ou 2, **caractérisé en ce qu'**on utilise, comme réfrigérant cryogène, de l'azote liquide ou de l'azote gazeux froid.

6. Procédé selon l'une quelconque des revendications précédentes, **caractérisé en ce que** le lavage comprend une projection d'un réfrigérant cryogène sur la surface traitée par l'agent pour retarder la prise.

7. Procédé selon la revendication 6, **caractérisé en ce que** la projection du réfrigérant cryogène sur la surface traitée comprend une projection de particules de glace carbonique et/ou d'un jet d'azote liquide.

8. Procédé selon l'une quelconque des revendications précédentes, **caractérisé en ce que** l'élément de construction est une dalle praticable, par exemple une dalle de trottoir.
